# EUROPÄISCHE PATENTSCHRIFT

(11) **EP 2 501 597 B1**
(45) Veröffentlichungstag und Bekanntmachung des Hinweises auf die Patenterteilung: **12.09.2018**
(21) Anmeldenummer: 10775742.9
(22) Anmeldetag: 18.10.2010
(51) Int. Cl.: B61C 17/12

(54) **BEDIENEINRICHTUNG UND VERFAHREN ZU DEREN BETRIEB**
CONTROL DEVICE AND METHOD FOR THE OPERATION THEREOF
DISPOSITIF DE COMMANDE ET PROCÉDÉ DE FONCTIONNEMENT

(30) Priorität: 16.11.2009 DE 102009053457
(43) Veröffentlichungstag der Anmeldung: 26.09.2012
(73) Patentinhaber: Siemens Aktiengesellschaft, 80333 München (DE)
(72) Erfinder: WEBER, Matthias, Alexander, 91052 Erlangen (DE)
(86) Internationale Anmeldenummer: PCT/EP2010/065639
(87) Internationale Veröffentlichungsnummer: WO 2011/057878

(56) Entgegenhaltungen:
- WO-A1-2005/114351
- WO-A1-2006/074645
- US-A1- 2004 168 606

## Beschreibung

Die Erfindung bezieht sich auf eine Bedieneinrichtung mit einem Bedienhebel, insbesondere zum Steuern einer Lokomotive oder eines Triebfahrzeugs, und mit einer Sensoreinrichtung zum Erfassen der Bedienstellung des Bedienhebels.

Eine solche Bedieneinrichtung ist aus der US 2004/0168606 bereits bekannt. Dort ist eine Lokomotive mit einer Bremse offenbart, die über einen Bremshebel betätigt werden kann. Der Bremshebel ist drehfest auf einer rotierbaren Welle verbunden, wobei ein interner Sensor vorgesehen ist, der die Rotation der Welle erfasst und ein der Rotation entsprechendes Signal bereitstellt. Als Sensor wird ein magnetischer Sensor, ein Potentiometer, ein optischer Sensor oder auf Nockenbasis arbeitender Schalter vorgeschlagen.

In der WO 2006/074645 ist eine Betätigungseinrichtung zur Auswahl von Schaltstufen eines Automatikgetriebes beschrieben. Hierbei ist ein Sensor zur Ermittlung der Schaltrelativstellung zwischen einem unbegrenzt rotierbaren Drehknauf und einer Kulissenscheibe offenbart.

In Schienenfahrzeugen, beispielsweise Lokomotiven oder Triebfahrzeugen, gelangen üblicherweise Bedienhebel zum Einsatz, bei denen durch ein Verstellen des Auslenkwinkels des Bedienhebels die durchzuführende Bedienfunktion bedienerseitig ausgewählt wird. Auslenkwinkel, denen eine bestimmte Bedienfunktion zugeordnet ist, werden beispielsweise durch eine Rastscheibe fixiert. Zur analogen Positionserfassung des Bedienhebels - beispielsweise zu Überwachungszwecken - wird üblicherweise eine Winkelmesseinrichtung eingesetzt, deren Messbereich herstellerseitig, beispielsweise über ein an den Bedienhebel angepasstes Umsetzgetriebe, an den maximalen Schwenkwinkel des Bedienhebels angepasst ist. Dies hat den Vorteil, dass eine maximale Messgenauigkeit bei der Winkelmessung erreicht wird; nachteilig ist jedoch, dass im Falle eines Komponentenwechsels, beispielsweise bei einem Austausch des Bedienhebels, umfangreiche Anpassarbeiten erforderlich sind, wenn sich der Verstellwinkelbereich des alten auszutauschenden Bedienhebels von dem des neuen Bedienhebels unterscheidet; beispielsweise muss ein neues Umsetzgetriebe eingesetzt werden.

Der Erfindung liegt die Aufgabe zugrunde, eine Bedieneinrichtung anzugeben, die besonders wartungsfreundlich ist und einen Austausch von Komponenten mit geringem Aufwand ermöglicht.

Diese Aufgabe wird erfindungsgemäß durch eine Bedieneinrichtung mit den Merkmalen gemäß Patentanspruch 1 gelöst. Vorteilhafte Ausgestaltungen der erfindungsgemäßen Bedieneinrichtung sind in Unteransprüchen angegeben.

Danach ist erfindungsgemäß vorgesehen, dass die Sensoreinrichtung eine Winkelmesseinrichtung aufweist, die geeignet ist, den Verstellwinkel des Bedienhebels unter Bildung eines digitalisierten Winkelwerts zu messen, wobei der Messbereich der Winkelmesseinrichtung größer als der Verstellwinkelbereich des Bedienhebels ist, und dass mit der Winkelmesseinrichtung eine Auswerteinrichtung in Verbindung steht, die anhand des digitalisierten Winkelwerts der Winkelmesseinrichtung die Bedienstellung des Bedienhebels bestimmt.

Ein wesentlicher Vorteil der erfindungsgemäßen Bedieneinrichtung ist darin zu sehen, dass diese einen Einsatz unterschiedlicher Bedienhebel mit unterschiedlichen Verstellwinkelbereichen ermöglicht; denn aufgrund des erfindungsgemäß vorgesehenen Messbereichs der Winkelmesseinrichtung, der größer als der Verstellwinkelbereich des Bedienteils ist, ist es möglich, Bedienhebel mit unterschiedlichen Verstellwinkelbereichen einzusetzen, wenn ein Austausch, beispielsweise zu Zwecken der Wartung oder der Reparatur, erforderlich ist. Die Umrechnung und Auswertung der Messergebnisse der Winkelmesseinrichtung kann elektronisch erfolgen, weil die Winkelmesseinrichtung digitalisierte Winkelwerte liefert.

Gemäß einer besonders bevorzugten Ausgestaltung der Bedieneinrichtung ist vorgesehen, dass die Auswerteinrichtung ein Zuordnungsmodul aufweist, das die von der Winkelmesseinrichtung gelieferten digitalisierten Winkelwerte jeweils auf einen Winkel des 360°-Einheitskreises - nachfolgend Einheitskreiswinkel genannt - abbildet. In der Auswerteinrichtung ist ein hebelspezifisches Konfigurationsmodul gespeichert, in dem jedem Einheitskreiswinkel des Bedienhebels jeweils die zugehörige Bedienstellung des Bedienhebels zugeordnet ist. Die Auswerteinrichtung ist außerdem derart ausgestaltet, dass sie mit dem Zuordnungsmodul den jeweiligen Einheitskreiswinkel ermittelt und mit dem Konfigurationsmodul und dem ermittelten Einheitskreiswinkel des Bedienhebels die jeweilige Bedienstellung des Bedienhebels bestimmt. Ein besonderes Kennzeichen dieser Variante ist, dass separate Module verwendet werden, nämlich ein Zuordnungsmodul und ein Konfigurationsmodul. Die Funktion des Zuordnungsmoduls besteht darin, die von der Winkelmesseinrichtung gelieferten digitalen Winkelwerte in Einheitskreiswinkel umzuwandeln, die messeinrichtungsunabhängig sind. Das Zuordnungsmodul beschreibt somit die Arbeitsweise der Winkelmesseinrichtung und erzeugt ausgangsseitig messeinrichtungsunabhängige Messwerte. Die Funktion des Zuordnungsmoduls besteht darin, die Arbeitsweise des Bedienhebels abzubilden und für die jeweiligen Einheitskreiswinkel anzugeben, welche Bedienstellung des Bedienhebels erreicht ist. Das Zuordnungsmodul beschreibt somit die Arbeitsweise des Bedienhebels und ist unabhängig von der verwendeten Winkelmesseinrichtung, da das Zuordnungsmodul auf der Basis der Einheitskreiswinkel arbeitet, die - wie bereits erwähnt - unabhängig von der eingesetzten Winkelmesseinrichtung sind. Durch die Verwendung separater Module ist es möglich, eine sehr einfache Anpassung der Bedieneinrichtung vorzunehmen, wenn einzelne Komponenten, wie beispielsweise der Bedienhebel oder die Winkelmesseinrichtung, durch einen anderen Bedienhebel oder eine andere Winkelmesseinrichtung ersetzt werden, da nur eine Anpassung des entsprechenden Moduls, also des Zuordnungsmoduls oder des Konfigurationsmoduls, erforderlich ist.

Das Zuordnungsmodul und das Konfigurationsmodul werden vorzugsweise durch Softwaremodule, beispielsweise in Form von Dateien, gebildet. Derartige Softwaremodule können beispielsweise von den Lieferanten der Winkelmesseinrichtung oder des Bedienhebels mitgeliefert werden, um eine einfache Installation oder Austausch der von ihnen gelieferten Komponenten zu ermöglichen.

Im Übrigen wird es als vorteilhaft angesehen, wenn die Winkelauflösung der Winkelmesseinrichtung derart eingestellt ist, dass die digitalisierten Winkelwerte den kompletten Winkelbereich des Einheitskreises von 360° abdecken können. Vorzugsweise kann die Winkelmesseinrichtung also Verstellwinkel in dem gesamten Winkelbereich des Einheitskreises von 360° messen. Bei einer solchen Ausgestaltung der Bedieneinrichtung ist sichergestellt, dass Bedienhebel mit völlig beliebigen Verstellwinkelbereichen eingesetzt werden können und dass stets eine Auswertung und Bestimmung der jeweiligen Bedienstellungen möglich ist.

Die Auswerteinrichtung kann beispielsweise durch eine Datenverarbeitungsanlage gebildet sein.

Die Erfindung bezieht sich darüber hinaus auf ein Schienenfahrzeug, insbesondere eine Lokomotive oder ein Triebfahrzeug, mit einer Bedieneinrichtung, wie sie oben beschrieben ist.

Die Erfindung bezieht sich darüber hinaus auf ein Verfahren zum Bestimmen der Bedienstellung eines Bedienhebels einer Bedieneinrichtung.

Bezüglich eines solchen Verfahrens ist erfindungsgemäß vorgesehen, dass mit einer Winkelmesseinrichtung der Verstellwinkel des Bedienhebels unter Bildung eines digitalisierten Winkelwerts gemessen wird, wobei der Messbereich der Winkelmesseinrichtung größer als der Verstellwinkelbereich des Bedienhebels ist, und dass mit einer Auswerteinrichtung anhand des digitalisierten Winkelwerts der Winkelmesseinrichtung die Bedienstellung des Bedienhebels bestimmt wird.

Bezüglich der Vorteile des erfindungsgemäßen Verfahrens sei auf die obigen Ausführungen im Zusammenhang mit der erfindungsgemäßen Bedieneinrichtung verwiesen, da die Vorteile der erfindungsgemäßen Bedieneinrichtung denen des erfindungsgemäßen Verfahrens im Wesentlichen entsprechen. Vorteilhafte Ausgestaltungen des erfindungsgemäßen Verfahrens sind in Unteransprüchen angegeben.

Die Erfindung wird nachfolgend anhand von Ausführungsbeispielen näher erläutert; dabei zeigen beispielhaft:
- Figur 1: ein Ausführungsbeispiel für eine erfindungsgemäße Bedieneinrichtung, anhand derer auch das erfindungsgemäße Verfahren beispielhaft erläutert wird, und
- Figur 2: die Arbeitsweise einer Auswerteinrichtung der Bedieneinrichtung gemäß Figur 1, wenn ein Bedienhebel der Bedieneinrichtung durch einen neuen Bedienhebel mit einem anderen Verstellwinkelbereich ausgetauscht wird.

In den Figuren werden der Übersicht halber für identische oder vergleichbare Komponenten stets dieselben Bezugszeichen verwendet.

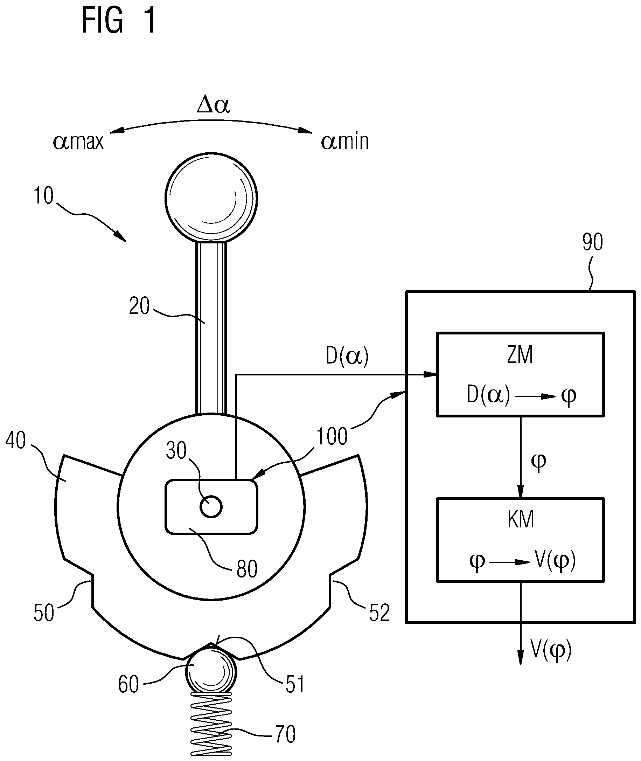

In der Figur 1 erkennt man eine Bedieneinrichtung 10 mit einem Bedienhebel 20, der um eine Hebelachse 30 verschwenkt werden kann. Der mögliche Verstellwinkelbereich des Bedienhebels 20 ist in der Figur 1 mit dem Bezugszeichen Δα gekennzeichnet. Es lässt sich erkennen, dass der Bedienhebel zwischen einem Winkel amin bis zu einem Winkel amax verschwenkt werden kann.

Mit dem Bedienhebel 20 steht eine Rastscheibe 40 in Verbindung, die mit Ausnehmungen 50, 51 und 52 ausgestattet ist. Die Ausnehmungen 50, 51 und 52 wirken mit einem Arretierungselement 60 zusammen, das durch eine Feder 70 druckbelastet ist und in der Figur 1 nach oben gedrückt wird. Durch die Ausnehmungen 50, 51 und 52 werden Bedienstellungen des Bedienhebels 20 vorgegeben: Wird nämlich die Rastscheibe 40 derart verschwenkt, dass das Arretierungselement 60 in eine der Ausnehmungen eingreifen kann, so wird durch die Feder 70 die jeweilige Bedienstellung des Bedienhebels 20 federnd arretiert.

Mit dem Bedienhebel 20 bzw. mit der Rastscheibe 40 steht eine Winkelmesseinrichtung 80 in Verbindung, die den jeweiligen Verstellwinkel α des Bedienhebels 20 misst und ausgangsseitig digitalisierte Winkelwerte D(α) erzeugt.

Mit der Winkelmesseinrichtung 80 steht ausgangsseitig eine Auswerteinrichtung 90 in Verbindung, zu der die digitalisierten Winkelwerte D(α) gelangen. Zur Verarbeitung der digitalisierten Winkelwerte D(α) weist die Auswerteinrichtung 90 ein winkelmesseinrichtungsspezifisches Zuordnungsmodul ZM auf, das die zur Auswerteinrichtung 90 gelangenden digitalisierten Winkelwerte D(α) verarbeitet.

Dem winkelmesseinrichtungsspezifischen Zuordnungsmodul ZM nachgeordnet ist ein hebelspezifisches Konfigurationsmodul KM, das ausgangsseitig ein Signal für die Bedienstellung V(ϕ) des Bedienhebels 20 erzeugt.

Die Winkelmesseinrichtung 80 und die Auswerteinrichtung 90 bilden eine Sensoreinrichtung 100 der Bedieneinrichtung 10.

Die Bedieneinrichtung 10 kann beispielsweise wie folgt betrieben werden:
Die von der Winkelmesseinrichtung 80 gebildeten digitalisierten Winkelwerte D(α) gelangen zu dem winkelmesseinrichtungsspezifischen Zuordnungsmodul ZM und werden von diesem verarbeitet. In diesem Verarbeitungsschritt erzeugt das Zuordnungsmodul ZM einen Einheitskreiswinkel ϕ, der dem von der Winkelmesseinrichtung 80 gelieferten digitalen Winkelwert D(α) auf dem 360°-Einheitskreis entspricht.

Der von dem Zuordnungsmodul ZM erzeugte Einheitskreiswinkel ϕ wird zu dem Konfigurationsmodul KM übertragen, in dem für jeden Einheitskreiswinkel ϕ des Bedienhebels 20 jeweils die zugehörige Bedienstellung V(ϕ) des Bedienhebels zugeordnet ist. Das Konfigurationsmodul KM ordnet somit dem von dem Zuordnungsmodul ZM empfangenen Einheitskreiswinkel ϕ die hinterlegte Bedienstellung V(ϕ) zu und gibt diese in Form eines entsprechenden Ausgangssignals ausgangsseitig am Ausgang der Auswerteinrichtung 90 ab.

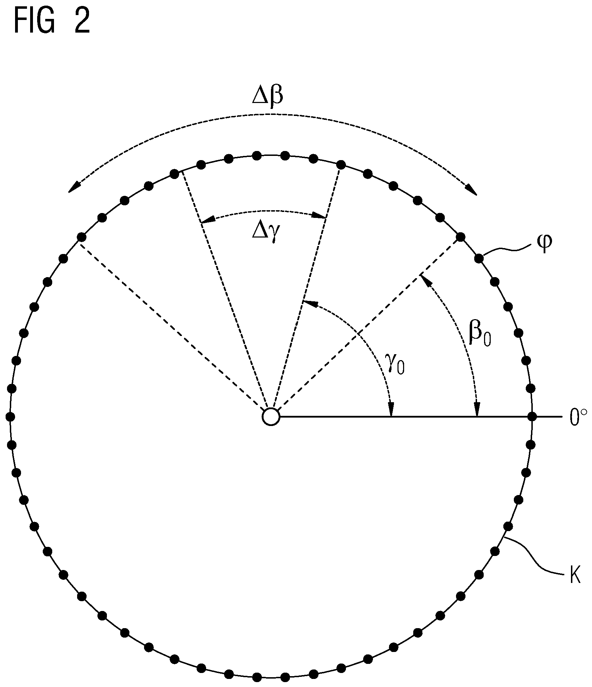

In der Figur 2 ist schematisch dargestellt, wie das Zuordnungsmodul ZM die Zuordnung zwischen den digitalisierten Winkelwerten D(α) und dem Einheitskreiswinkel ϕ durchführt. Es lässt sich der Einheitskreis K erkennen, auf dem Einheitskreiswinkel ϕ in Form von Punkten gekennzeichnet sind. Den Einheitskreiswinkeln ϕ zugeordnet sind Winkelwerte, die von der Winkelmesseinrichtung 80 geliefert werden. Je nach dem eingesetzten Bedienhebel 20 kann der Verstellwinkelbereich Δα gemäß Figur 1 unterschiedlich groß sein; auch können sich die Startwinkel amin, bei denen ein Verschwenken des Bedienhebels 20 beginnt, unterscheiden.

In der Figur 2 sind beispielhaft für zwei unterschiedliche Bedienhebel jeweils der Startwinkel und der Verstellwinkelbereich durch gestrichelte Linien dargestellt; dabei bezeichnet Δβ den Verstellwinkelbereich eines ersten Bedienhebels, β₀ den Startwinkel dieses ersten Bedienhebels, Δγ den Verstellwinkelbereich eines zweiten, anderen Bedienhebels und γ₀ den Startwinkel dieses zweiten anderen Bedienhebels.

Es lässt sich erkennen, dass die Verstellwinkelbereiche sowie die Startwinkel auf Einheitskreiswinkel des 360°-Einheitskreises abgebildet werden. Die Zuordnung zwischen den Verstellwinkeln bzw. den digitalisierten Winkelwerten D(α) und den Einheitskreiswinkeln ϕ ist unabhängig von dem eingesetzten Bedienhebel und wird lediglich durch die Funktionsweise der Winkelmesseinrichtung 80 bestimmt. Durch die Zuordnung der Verstellwinkel α zu Einheitskreiswinkeln ϕ wird somit eine Vorauswertung durchgeführt, die lediglich von der Arbeitsweise der Winkelmesseinrichtung 80 bestimmt ist und bedienhebelunabhängig ist. Der Einfluss des Bedienhebels 20 auf die jeweilige Bedienstellung wird durch das hebelspezifische Konfigurationsmodul KM berücksichtigt, das die jeweilige Bedienstellung in Abhängigkeit von dem ermittelten Einheitskreiswinkel ϕ angibt. Das hebelspezifische Konfigurationsmodul KM ist somit unabhängig von der eingesetzten Winkelmesseinrichtung 80, da deren Arbeitsweise durch das Zuordnungsmodul ZM beschrieben wird.

Durch die Trennung des Zuordnungsmoduls ZM und des Konfigurationsmoduls KM ist es nun möglich, ohne großen Aufwand einen Austausch der Winkelmesseinrichtung 80 oder einen Austausch des Bedienhebels 20 vorzunehmen. Wird beispielsweise der Bedienhebel 20 durch einen anderen Bedienhebel mit einem anderen Verstellwinkelbereich Δα ausgetauscht, so muss die Auswerteinrichtung 90 lediglich ein Konfigurationsmodul KM laden bzw. berücksichtigen, das die Funktionsweise des Bedienhebels 20 beschreibt. Das Zuordnungsmodul ZM kann dabei unverändert bleiben, da die Winkelmesseinrichtung 80 als solche nicht verändert wird.

Wird hingegen die Winkelmesseinrichtung 80 durch eine andere Winkelmesseinrichtung ausgetauscht, wobei der Bedienhebel 20 unverändert bleibt, so muss in der Auswerteinrichtung 90 nur ein neues Zuordnungsmodul ZM installiert werden, das die Arbeitsweise der neuen Winkelmesseinrichtung 80 berücksichtigt und eine korrekte Zuordnung der digitalisierten Winkelwerte D(α) zu Einheitskreiswinkeln ϕ ermöglicht. Das Konfigurationsmodul KM kann an dieser Stelle unverändert bleiben, da sich an dem Bedienhebel 20 und somit an der Zuordnung zwischen den Einheitswinkeln ϕ und der jeweiligen Bedienstellung nichts ändert.

Zusammengefasst ist damit festzustellen, dass durch die Verwendung von Zuordnungsmodulen, die die Funktionsweise der Winkelmesseinrichtung 80 beschreiben, und Konfigurationsmodulen KM, die die Arbeitsweise des Bedienhebels beschreiben, ein einfaches Austauschen und Modifizieren von einzelnen Komponenten der Bedieneinrichtung 10 möglich ist.

Durch die beschriebene Verwendung von Zuordnungsmodulen ZM und Konfigurationsmodulen KM lässt sich also mit anderen Worten erreichen, dass unabhängig von einer spezifischen Bedienfunktion jede Hebelstellung eines Bedienhebels einen zugeordneten festen Einheitskreiswinkel oder Einheitskreiswinkelbereich aufweist. Unabhängig von spezifischen Auslenkwinkeln werden also für alle Bedienhebel in gleicher Lage identische Einheitskreiswinkel erzeugt, so dass unter Verwendung eines beispielsweise vom Hersteller des Bedienhebels 20 gelieferten Konfigurationsmoduls KM eine einfache Parametrierung der Bedieneinrichtung 10 hinsichtlich des verwendeten Bedienhebels 20 möglich ist. Soll der Bedienhebel 20 durch einen anderen Bedienhebel ausgetauscht werden, so ist nach einem mechanischen Austausch des Bedienhebels lediglich das alte Konfigurationsmodul durch ein neues Konfigurationsmodul zu ersetzen, das die Arbeitsweise des Bedienhebels 20 hinsichtlich seiner bereitgestellten Bedienstellungen charakterisiert. Die übrigen Komponenten der Auswerteinrichtung 90, insbesondere das Zuordnungsmodul ZM, das die Funktionsweise der Winkelmesseinrichtung 80 charakterisiert, können unverändert bleiben.

Zusammenfassend kann festgestellt werden, dass sich durch die beschriebene Vereinheitlichung bzw. Modularisierung der Auswerteinrichtung 90 der Anpassungsaufwand verringert, wenn Teile der Bedieneinrichtung 10 durch andere Teile, beispielsweise einen anderen Bedienhebel oder eine andere Winkelmesseinrichtung, ersetzt werden; denn es müssen auswerteinrichtungsseitig lediglich die entsprechende Module, die die ausgetauschten Teile beschreiben, aktualisiert werden.

### Bezugszeichenliste

- 10: Bedieneinrichtung
- 20: Bedienhebel
- 30: Hebelachse
- 40: Rastscheibe
- 50: Ausnehmung
- 51: Ausnehmung
- 52: Ausnehmung
- 60: Arretierungselement
- 70: Feder
- 80: Winkelmesseinrichtung
- 90: Auswerteinrichtung
- 100: Sensoreinrichtung

- α: Verstellwinkel
- Δα: Verstellwinkelbereich
- Δβ: Verstellwinkelbereich
- β₀: Startwinkel
- Δγ: Verstellwinkelbereich
- γ₀: Startwinkel
- αmin: Winkel
- αmax: Winkel
- ϕ: Einheitskreiswinkel
- D(α): Winkelwert
- K: Einheitskreis
- V(ϕ): Bedienstellung
- KM: Konfigurationsmodul
- ZM: Zuordnungsmodul

## Patentansprüche

1. Bedieneinrichtung (10) mit einem Bedienhebel (20), insbesondere zum Steuern einer Lokomotive oder eines Triebfahrzeugs, und mit einer Sensoreinrichtung (100) zum Erfassen der Bedienstellung (V) des Bedienhebels,
**dadurch gekennzeichnet, dass**
- die Sensoreinrichtung eine Winkelmesseinrichtung (80) aufweist, die geeignet ist, den Verstellwinkel (α) des Bedienhebels unter Bildung eines digitalisierten Winkelwerts D(α) zu messen, wobei der Messbereich der Winkelmesseinrichtung größer als der Verstellwinkelbereich (Δα) des Bedienhebels ist, und
- mit der Winkelmesseinrichtung eine Auswerteinrichtung (90) in Verbindung steht, die anhand des digitalisierten Winkelwerts der Winkelmesseinrichtung die Bedienstellung des Bedienhebels bestimmt.

2. Bedieneinrichtung nach Anspruch 1,
**dadurch gekennzeichnet, dass**
- die Auswerteinrichtung ein Zuordnungsmodul (ZM) aufweist, das die von der Winkelmesseinrichtung gelieferten digitalisierten Winkelwerte jeweils auf einen Winkel (ϕ) des Einheitskreises - nachfolgend Einheitskreiswinkel genannt - abbildet,
- in der Auswerteinrichtung ein hebelspezifisches Konfigurationsmodul (KM) gespeichert ist, in dem jedem Einheitskreiswinkel des Bedienhebels jeweils die zugehörige Bedienstellung des Bedienhebels zugeordnet ist, und
- die Auswerteinrichtung derart ausgestaltet ist, dass sie mit dem Zuordnungsmodul den jeweiligen Einheitskreiswinkel ermittelt und mit dem Konfigurationsmodul und dem ermittelten Einheitskreiswinkel des Bedienhebels die jeweilige Bedienstellung des Bedienhebels bestimmt.

3. Bedieneinrichtung nach einem der voranstehenden Ansprüche,
**dadurch gekennzeichnet, dass** das Zuordnungsmodul und das Konfigurationsmoduls durch Softwaremodule, insbesondere in Form von Dateien, gebildet werden.

4. Bedieneinrichtung nach einem der voranstehenden Ansprüche,
**dadurch gekennzeichnet, dass** die Winkelauflösung der Winkelmesseinrichtung derart eingestellt ist, dass die digitalisierten Winkelwerte den Winkelbereich des Einheitskreises von 360 Grad abdecken können.

5. Bedieneinrichtung nach einem der voranstehenden Ansprüche,
**dadurch gekennzeichnet, dass** die Winkelmesseinrichtung Verstellwinkel im gesamten Winkelbereich des Einheitskreises von 360 Grad messen kann.

6. Bedieneinrichtung nach einem der voranstehenden Ansprüche,
**dadurch gekennzeichnet, dass** die Auswerteinrichtung eine Datenverarbeitungseinrichtung umfasst.

7. Fahrzeug, insbesondere Schienenfahrzeug, mit einer Bedieneinrichtung nach einem voranstehenden Ansprüche.

8. Verfahren zum Bestimmen der Bedienstellung (V) eines Bedienhebels (20) einer Bedieneinrichtung (10) nach Anspruch 1
**dadurch gekennzeichnet, dass**
- mit einer Winkelmesseinrichtung (80) der Verstellwinkel (α) des Bedienhebels unter Bildung eines digitalisierten Winkelwerts (D(α)) gemessen wird, wobei der Messbereich der Winkelmesseinrichtung größer als der Verstellwinkelbereich (Δα) des Bedienhebels ist, und
- mit einer Auswerteinrichtung anhand des digitalisierten Winkelwerts der Winkelmesseinrichtung die Bedienstellung des Bedienhebels bestimmt wird.

9. Verfahren nach Anspruch 8,
**dadurch gekennzeichnet, dass**
- die von der Winkelmesseinrichtung gelieferten digitalisierten Winkelwerte jeweils auf einen Winkel des Einheitskreises - nachfolgend Einheitskreiswinkel genannt - abgebildet werden und
- mit dem jeweils abgebildeten Einheitskreiswinkel die Bedienstellung des Bedienhebels bestimmt wird, indem ein hebelspezifisches Konfigurationsmodul ausgelesen wird, in dem jedem Einheitskreiswinkel des Bedienhebels jeweils die zugehörige Bedienstellung des Bedienhebels zugeordnet ist.

10. Verfahren nach einem der voranstehenden Ansprüche 8-9,
**dadurch gekennzeichnet, dass** die Winkelauflösung der Winkelmesseinrichtung derart eingestellt wird, dass die digitalisierten Winkelwerte den Winkelbereich des Einheitskreises von 360 Grad abdecken können.

11. Verfahren nach einem der voranstehenden Ansprüche 8-9,
**dadurch gekennzeichnet, dass** mit der Winkelmesseinrichtung Verstellwinkel im gesamten Winkelbereich des Einheitskreises von 360 Grad gemessen werden.

## Claims

1. Operator control (10) having an operator control lever (20), in particular for controlling a locomotive or a traction vehicle, and having a sensor device (100) for sensing the operator control position (V) of the operator control lever, **characterized in that**
- the sensor device has an angle measuring device (80) which is suitable for measuring the adjustment angle (α) of the operator control lever by forming a digitized angle value D(α), wherein the measuring range of the angle measuring device is larger than the adjustment angle range (Δα) of the operator control lever, and
- an evaluation device (90) which determines the operator control position of the operator control lever on the basis of the digitized angle value of the angle measuring device is connected to the angle measuring device.

2. Operator control according to Claim 1,
**characterized in that**
- the evaluation device has an assignment module (ZM) which maps each of the digitized angle values supplied by the angle measuring device to an angle (ϕ) of the unit circle - referred to below as unit circle angle,
- in the evaluation device a lever-specific configuration module (KM) is stored in which the associated operator control position of the operator control lever is respectively assigned to each unit circle angle of the operator control lever, and
- the evaluation device is configured in such a way that it determines the respective unit circle angle with the assignment module, and determines the respective operator control position of the operator control lever with the configuration module and the determined unit circle angle of the operator control lever.

3. Operator control according to one of the preceding claims, **characterized in that** the assignment module and configuration module are formed by software modules, in particular in the form of files.

4. Operator control according to one of the preceding claims, **characterized in that** the angle resolution of the angle measuring device is set in such a way that the digitized angle values can cover the angle range of the unit circle of 360 degrees.

5. Operator control according to one of the preceding claims, **characterized in that** the angle measuring device can measure adjustment angles in the entire angle range of the unit circle of 360 degrees.

6. Operator control according to one of the preceding claims, **characterized in that** the evaluation device comprises a data processing device.

7. Vehicle, in particular rail vehicle having an operator control according to one of the preceding claims.

8. Method for determining the operator control position (V) of an operator control lever (20) of an operator control (10) according to Claim 1,
**characterized in that**
- the adjustment angle (α) of the operator control lever is measured with an angle measuring device (80) by forming a digitized
angle value (D(α)), wherein the measuring range of the angle measuring device is larger than the adjustment angle range (Δα) of the operator control lever, and
- the operator control position of the operator control lever is determined with an evaluation device on the basis of the digitized angle value of the angle measuring device.

9. Method according to Claim 8,
**characterized in that**
- the digitized angle values which are supplied by the angle measuring device are each mapped to an angle of the unit circle - referred to below as unit circle angle, and
- the operator control position of the operator control lever is determined with the respectively mapped unit circle angle by reading out a lever-specific configuration module in which the associated operator control position of the operator control lever is respectively assigned to each unit circle angle of the operator control lever.

10. Method according to one of the preceding Claims 8-9, **characterized in that** the angle resolution of the angle measuring device is set in such a way that the digitized angle values can cover the angle range of the unit circle of 360 degrees.

11. Method according to one of the preceding Claims 8-9, **characterized in that** adjustment angles in the entire angle range of the unit circle of 360 degrees are measured with the angle measuring device

## Revendications

1. Dispositif de commande (10) comprenant un levier de commande (20), en particulier pour la conduite d'une locomotive ou d'un véhicule de traction, et comprenant un dispositif de détection (100) pour l'enregistrement de la position de commande (V) du levier de commande ;
**caractérisé en ce que**
- le dispositif de détection présente un dispositif de mesure angulaire (80), qui est approprié pour mesurer l'angle de déplacement (α) du levier de commande en formant une valeur angulaire numérisée D(α) ; dans lequel la plage de mesure du dispositif de mesure angulaire est supérieure à la plage de l'angle de déplacement (Δα) du levier de commande ; et
- avec le dispositif de mesure angulaire, est mis en liaison un dispositif d'évaluation (90) qui détermine, sur base de la valeur angulaire numérisée du dispositif de mesure angulaire, la position de commande du levier de commande.

2. Dispositif de commande selon la revendication 1, **caractérisé en ce que**
- le dispositif d'évaluation présente un module d'attribution (ZM) qui reproduit les valeurs angulaires numérisées fournies par le dispositif de mesure angulaire respectivement sur un angle (ϕ) du cercle de rayon unité - que l'on désigne ci-après par l'expression - angle du cercle de rayon unité - ;
- dans le dispositif d'évaluation, un module de configuration (KM) spécifique au levier est mis en mémoire, dans lequel, à chaque angle du cercle de rayon unité, est attribuée respectivement la position de commande correspondante du levier de commande ; et
- le dispositif d'évaluation est conçu d'une manière telle qu'il identifie avec le module d'attribution l'angle du cercle de rayon unité respectif et qu'il détermine, avec le module de configuration et l'angle identifié du cercle de rayon unité du levier de commande, la position de commande respective du levier de commande.

3. Dispositif de commande selon l'une quelconque des revendications précédentes, **caractérisé en ce que** le module d'attribution et le module de configuration sont formés par des modules informatiques, en particulier sous la forme de données.

4. Dispositif de commande selon l'une quelconque des revendications précédentes, **caractérisé en ce que** la résolution angulaire du dispositif de mesure angulaire est réglée d'une manière telle que les valeurs angulaires numérisées peuvent recouvrir la plage angulaire du cercle de rayon unité de 360°.

5. Dispositif de commande selon l'une quelconque des revendications précédentes, **caractérisé en ce que** le dispositif de mesure angulaire peut mesurer des angles de déplacement dans l'ensemble de la plage angulaire du cercle de rayon unité de 360°.

6. Dispositif de commande selon l'une quelconque des revendications précédentes, **caractérisé en ce que** le dispositif d'évaluation comprend un dispositif de traitement de données.

7. Véhicule, en particulier véhicule ferroviaire, comprenant un dispositif de commande selon l'une quelconque des revendications précédentes.

8. Procédé pour la détermination de la position de commande (V) d'un levier de commande (20) d'un dispositif de commande (10) selon la revendication 1, **caractérisé en ce que**
- avec un dispositif de mesure angulaire (80), on mesure l'angle de déplacement (α) du levier de commande en formant une valeur angulaire numérisée D(α) ; dans lequel la plage de mesure du dispositif de mesure angulaire est supérieure à la plage de l'angle de déplacement (Δα) du levier de commande ; et
- avec un dispositif d'évaluation, en se basant sur la valeur angulaire numérisée du dispositif de mesure angulaire, on détermine la position de commande du levier de commande.

9. Procédé selon la revendication 8,
**caractérisé en ce que**
- les valeurs angulaires numérisées fournies par le dispositif de mesure angulaire sont reproduites respectivement sur un angle du cercle de rayon unité - que l'on désigne ci-après par l'expression - angle du cercle de rayon unité - ; et
- avec l'angle du cercle de rayon unité respectivement reproduit, on détermine la position de commande du levier de commande, par le fait d'extraire un module de configuration spécifique au levier, dans lequel, à chaque angle du cercle de rayon unité du levier de commande, est attribuée respectivement la position de commande correspondante du levier de commande.

10. Procédé selon l'une quelconque des revendications précédentes 8 à 9, **caractérisé en ce que** la résolution angulaire du dispositif de mesure angulaire est réglée d'une manière telle que les valeurs angulaires numérisées peuvent recouvrir la plage angulaire du cercle de rayon unité de 360°.

11. Procédé selon l'une quelconque des revendications précédentes 8 à 9, **caractérisé en ce qu'**avec le dispositif de mesure angulaire, on peut mesurer des angles de déplacement dans l'ensemble de la plage angulaire du cercle de rayon unité de 360°.
